Europäisches Patentamt

European Patent Office

Office européen des brevets

(19)

(11) Veröffentlichungsnummer : **0 298 028 B1**

(12)
# EUROPÄISCHE PATENTSCHRIFT

(45) Veröffentlichungstag der Patentschrift :
**15.04.92 Patentblatt 92/16**

(51) Int. Cl.$^5$ : **B23H 7/26,** B23Q 3/155

(21) Anmeldenummer : **88810423.9**

(22) Anmeldetag : **21.06.88**

(54) **Vorrichtung zur Handhabung von Elektroden an einer Senkerodiermaschine.**

(30) Priorität : **03.07.87 DE 3722032**

(43) Veröffentlichungstag der Anmeldung :
**04.01.89 Patentblatt 89/01**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**PATENT ABSTRACTS OF JAPAN vol. 4, no. 99
(M-21) 581 16 Juli 1980, & JP-A-55 58931 (HITA-
CHI-SEIKO)**

(73) Patentinhaber : **Erowa AG
Winkelstrasse 8
CH-5734 Reinach (CH)**

(72) Erfinder : **Schneider, Rudolf
Gondiswinkel
CH-5734 Reinach (CH)**

(74) Vertreter : **Rottmann, Maximilian R.
c/o Rottmann, Maspoli + Zimmermann AG
Glattalstrasse 37
CH-8052 Zürich (CH)**

## Beschreibung

Die vorliegende Erfindung bezieht sich auf eine Vorrichtung zur Handhabung von Elektroden an einer Senkerodiermaschine, welche eine das flüssige Dielektrikum und das zu bearbeitende Werkstück aufnehmende Wanne aufweist, die gegenüber der Pinole in X- und Y-Richtung verstellbar gelagert ist.

Derartige Senkerodiermaschinen finden zunehmende Verbreitung und deren Wirkungsweise, die als bekannt vorausgesetzt werden darf, spielt im Rahmen der Erfindung keine wesentliche Rolle. Bedeutungsvoll im erfindungsgemässen Zusammenhang ist jedoch, dass die Elektroden einer solchen Maschine während des Betriebs des öfteren gewechselt werden müssen.

Namentlich ist es bei manchen Bearbeitungsvorgängen an ein und demselben Werkstück erforderlich, im Lauf der Bearbeitung die von der Senkerodiermaschine verwendete Elektrode mehrmals auszutauschen, insbesondere, wenn die Steuerung der Maschine automatisch erfolgt und somit in der Lage ist, eine Vielzahl von nacheinander ablaufenden Bearbeitungsvorgängen an ein und demselben Werkstück auszuführen. Um diesen selbsttätig ablaufenden Bearbeitungsvorgang nicht zu stören bzw. nicht zu unterbrechen, sind automatisch arbeitende Elektrodenwechselvorrichtungen geschaffen worden, die gegebenenfalls auch vom Maschinenprogramm gesteuert werden können, wie dies z.B. aus der DE-OS 28 37 719 grundsätzlich bekannt geworden ist.

Da die elektroerosive Bearbeitung ein verhältnismässig langsam fortschreitender Bearbeitungsvorgang ist, somit vermehrt das Bestreben besteht, diesen Vorgang zu automatisieren, sind weiter zum Beispiel aus der DE-OS 35 33 001 Elektrodenwechsler bekannt geworden, bei denen ein endlos umlaufendes, in der Art einer Kette ausgebildetes Elektrodenmagazin vorgesehen ist. Ein Greifarm hat die Aufgabe, eine ausgewählte Elektrode zu erfassen und in die Bearbeitungseinrichtung einzusetzen bzw. aus der Bearbeitungseinrichtung zu entfernen und in das Magazin zurückzulegen. Damit bei der Entnahme aus dem Magazin die richtige Elektrode ergriffen wird, bzw. damit bei der Ablage in das Magazin die Elektrode wieder ihren vorbestimmten Platz einnimmt, muss ein derartiges Umlaufmagazin solange angetrieben werden, bis sich die ausgewählte Elektrode bzw. der vorbestimmte Ablageplatz im Bereich des Greifarmes befindet.

Der Nachteil derartiger Elektrodenwechsler ist einerseits der grosse Platzbedarf, die lange Zugriffszeit und der hohe Preis, insbesondere, wenn eine grosse Anzahl von Elektroden im Magazin abgelegt werden und für einen etwaigen Zugriff bereit sein sollen. Um diese Nachteile zu vermeiden, hat man zum Beispiel in der EP-A-0 132 599 Al auch schon vorgeschlagen, das Werkzeugmagazin mit einer Mehrzahl von um eine erste Achse drehbaren, im wesentlichen scheibenförmigen Elektrodenträgern auszubilden, entlang deren Peripherie die Elektroden angeordnet sind, und einen Transportarm vorzusehen, der um eine im Abstand dazu angeordnete, zweite Achse verschwenkbar ist, um die Elektroden zu ergreifen, aus dem Magazin zu nehmen und in die Bearbeitungseinrichtung einzusetzen bzw. vice versa.

Eine solche Einrichtung besitzt eine wesentlich kürzere Zugriffszeit und einen verringerten Platzbedarf, ist aber immer noch ziemlich teuer, so dass sie nur bei einer grossen Anzahl benötigter Elektrodenplätze wirtschaftlich ist.

In zahlreichen Anwendungsfällen besteht aber gar nicht das Bedürfnis, Dutzende oder gar Hunderte von Elektroden zugriffsbereit zu halten, sondern es würde genügen, wenn einige wenige Elektroden automatisch gewechselt werden könnten; die Anschaffung eines automatischen Elektrodenwechslers der vorstehend geschilderten Arten wäre somit unwirtschaftlich.

In der Veröffentlichung JP-A 55-58931 ist zwar eine Vorrichtung zur Handhabung von Elektroden an einer Senkerodiermaschine vorgeschlagen, welche eine das Dielektrikum und das zu bearbeitende Werkstück aufnehmende Wanne aufweist, die gegenüber der Pinole in X- und Y-Richtung verstellbar gelagert ist, wobei - innerhalb der Wanne eine Elektrodenträgeranordnung mit einer Mehrzahl von Elektrodenträgern angeordnet ist und wobei die Elektrodenträger von der Seitenwand der Wanne gegen das Wanneninnere in einen Bereich hineinragen, in den die Pinole durch X- oder Y-Verstellung der Wanne bringbar ist. Diese Anordnung benötigt aber innerhalb der Wanne relativ viel Platz, so dass der nutzbare Raum der Wanne stark eingeschränkt ist.

Es ist daher die Aufgabe der vorliegenden Erfindung, eine Handhabungsvorrichtung der eingangs genannten Art zu schaffen, welche das automatische Wechseln einiger weniger Elektroden gestattet, die kaum zusätzlichen Platz einnimmt und die einfach und robust aufgebaut ist, somit kostengünstig hergestellt werden kann. Gemäss der Erfindung wird diese Aufgabe durch die Merkmale des Patentanspruchs 1 gelöst.

Wenn nämlich die Wanne nur geringfügig vergrössert wird, finden innerhalb der Wanne, nahe einer Seitenwand, je nach Grösse der Elektroden sechs bis acht davon Platz. Durch die schwenkbare Ausgestaltung der Elektrodenträger ist sichergestellt, dass diese in einen Bereich der Wanne gebracht werden können, in den die Pinole verschiebbar ist, um vom Spannfutter der Pinole selbsttätig übernommen zu werden.

Weiterbildungen des Erfindungsgegenstandes und bevorzugte Ausführungen desselben sind in den abhängigen Patentansprüchen 2 bis 9 definiert.

Im folgenden wird ein Ausführungsbeispiel der erfindungsgemässen Vorrichtung, unter Bezugnahme auf die beiliegenden Zeichnungen, näher erläutert. In den Zeichnungen zeigen:

Fig. 1 eine schematische Vorderansicht einer bekannten Senkerodiermaschine, an der die erfindungsgemässe Vorrichtung verwendet werden kann;

Fig. 2 eine ausschnittweise Ansicht einer Seitenwand der Wanne von innen her, mit der Vorrichtung in Ruhestellung;

Fig. 3 eine ausschnittweise Ansicht der Wanne von oben her, wobei ein Teil der Vorrichtung gestrichelt in Betriebsstellung gezeigt ist;

Fig. 4 einen Schnitt durch eine Wannenwand mit der Vorrichtung in Ruhestellung; und

Fig. 5 einen ähnlichen Schnitt wie in Fig. 4, aber mit der Vorrichtung in Betriebsstellung.

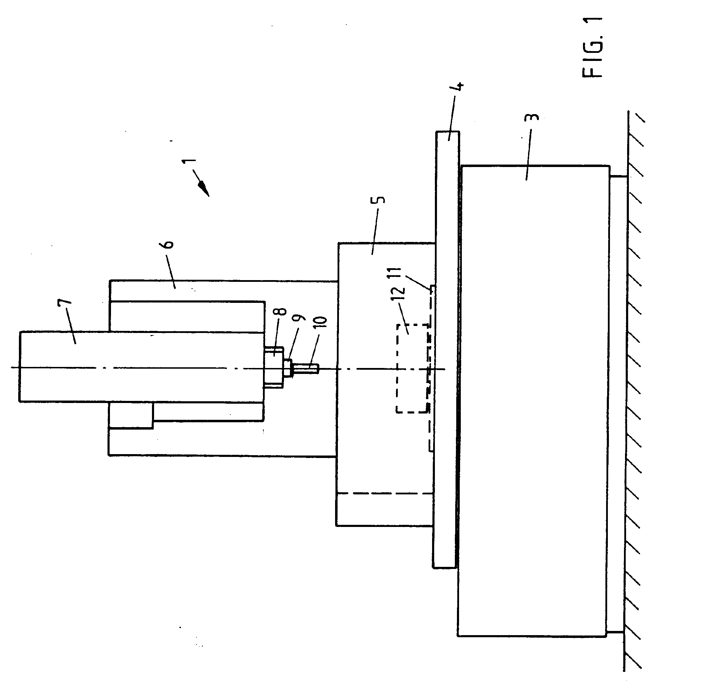

In der Fig. 1 ist eine generell mit 1 bezeichnete Senkerodiermaschine in einer schematischen Ansicht von vorne dargestellt. Die Erodiermaschine umfasst eine Basis 3, auf der ein in X- und Y-Richtung verschiebbarer Tisch 4 gelagert ist. Der Tisch 4 trägt eine oben offene Wanne 5, die zur Aufnahme der für den Erodierprozess erforderlichen Flüssigkeit dient. An der Basis 3 ist ferner eine Säule 6 angebracht, die den Maschinenkopf 7 trägt. Im Maschinenkopf 7 ist eine Pinole 8 in Z-Richtung, d.h. höhenverstellbar, und gegebenenfalls verdrehbar aufgenommen. Die Pinole 8 ist mit einem Spannfutter 9 zur Aufnahme eines nur schematisch angedeuteten Bearbeitungswerkzeuges 10, namentlich einer Erodierelektrode, versehen. In der Wanne 5 ist eine Werkstückaufnahme 11 angeordnet, die ein zu bearbeitendes Werkstück 12 aufnimmt.

Der genauere Aufbau und die Wirkungsweise einer solchen Erodiermaschine ist dem mit der Materie vertrauten Fachmann bekannt und braucht hier nicht näher erläutert zu werden.

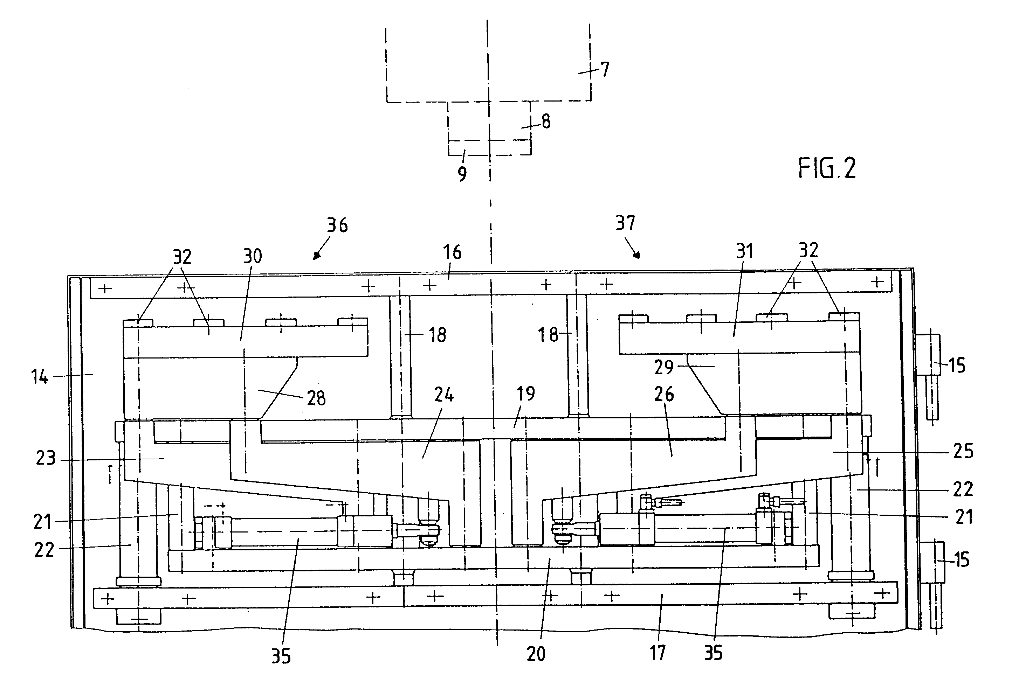

Beim in den Fig. 2 bis 5 dargestellten Ausführungsbeispiel ist nun vorgesehen, dass die Wanne 5 an ihrer Vorderseite mit einer türartigen Vorderwand 14 versehen ist, die z.B. mittels Schar nieren 15 an der Wanne 5 schwenkbar befestigt ist. An der Innenseite der Vorderwand 14 ist ein oberer Querträger 16 und ein unterer Querträger 17 angebracht, zwischen denen sich zwei Führungssäulen 18 erstrecken. Ferner ist ein Rahmen vorgesehen, bestehend aus einer oberen Quertraverse 19, einer unteren Quertraverse 20 und je einer links- und rechtsseitigen Verbindungstraverse 21. Der Rahmen ist entlang der Führungssäulen 18 höhenverstellbar gelagert. Zur Verstellung des Rahmens sind beidseitig desselben angeordnete, z.B. pneumatische Antriebszylinder 22 vorgesehen, die sich unten am unteren Querträger 17 abstützen und die oben mit über die seitlichen Verbindungstraversen 21 vorstehenden Verlängerungen der oberen Quertraverse 19 des Rahmens verbunden sind.

Am Rahmen sind zwei Paare von Schwenkarmen gelagert: Das erste Schwenkarmpaar umfasst einen äusseren Arm 23 und einen inneren Arm 24, und das zweite Schwenkarmpaar umfasst einen äusseren Arm 25 und einen inneren Arm 26. In seitlicher Projektion gesehen (vgl. Fig. 2) haben die Schwenkarme 23-26 etwa Z-förmige Gestalt, wobei jeweils der eine Aussenschenkel jedes Schwenkarms 23-26 um jeweils eine Welle 27, die sich zwischen der oberen Quertraverse 19 und der unteren Quertraverse 20 des Rahmens erstrecken, schwenkbar gelagert ist. Die beiden anderen Aussenschenkel des ersten Schenkarmpaares 23, 24 tragen einen Lagerbock 28 und die beiden anderen Aussenschenkel des zweiten Schwenkarmpaares tragen einen Lagerbock 29, wobei die Verbindung zwischen jeweiligen Aussenschenkeln und zugeordnetem Lagerbock ebenfalls gelenkig gestaltet ist. Insgesamt ergibt sich dadurch eine parallelogrammartige Gestängeanordnung zur Parallelverschiebung der Lagerböcke 28 und 29.

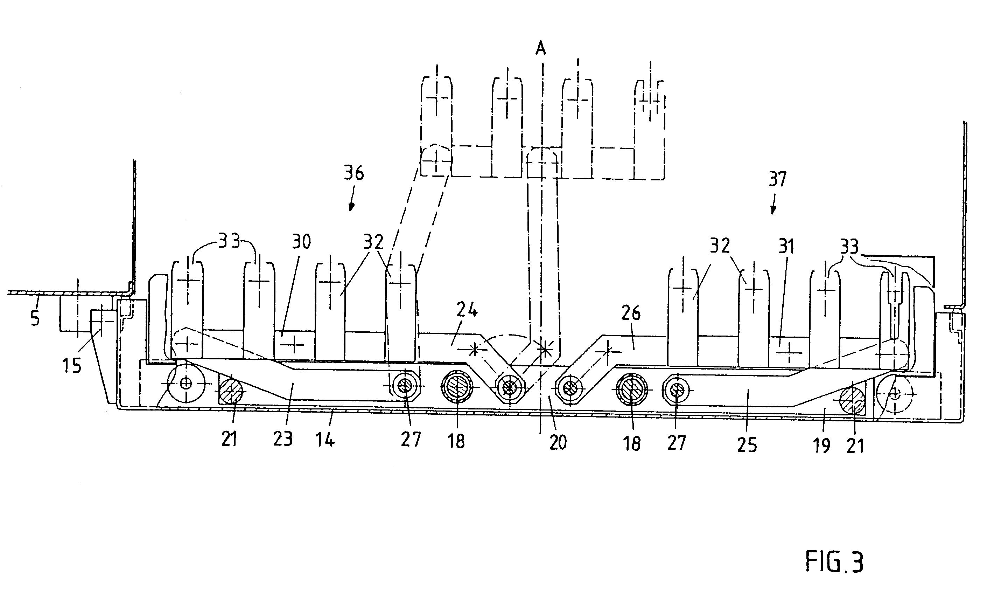

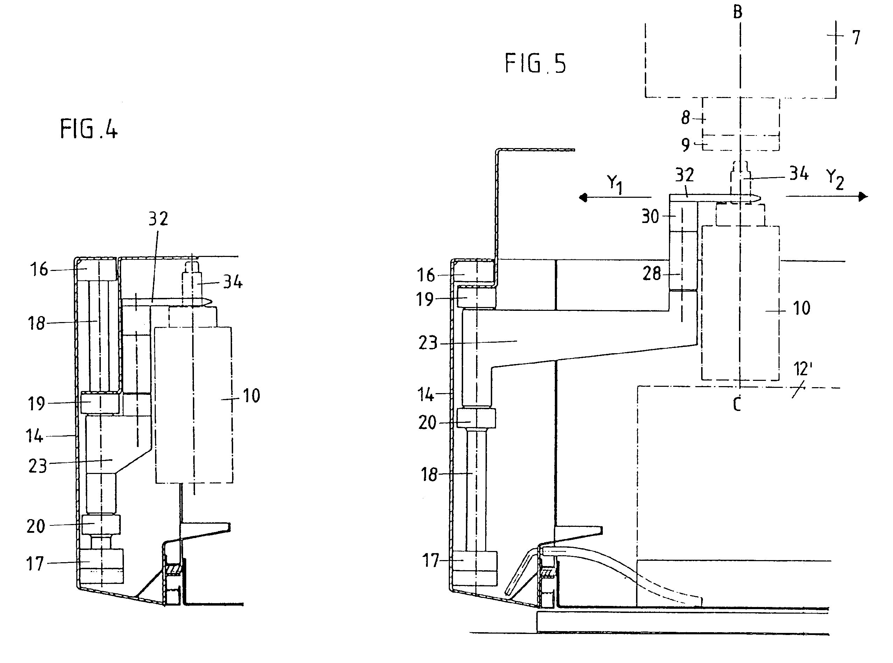

Die beiden Lagerböcke 28 und 29 tragen je einen Querbalken 30 bzw. 31, an welchem im Beispielsfall je vier Elektrodenträger 32 befestigt sind. Diese besitzen, wie aus Fig. 3-5 ersichtlich ist, zungenartige Gestalt und stehen senkrecht von den Querbalken 30 bzw. 31 ab, in Richtung gegen das Innere der Wanne 5. An ihrem freien Ende sind sie mit einer schlitzartigen Öffnung 33 versehen, die zur Aufnahme des Schaftes 34 einer Elektrode 10 dient (Fig. 4 und 5).

Durch den Rahmen, gebildet aus den Traversen 19, 20 und 21, durch die vier Schwenkarme 23, 24, 25 und 26, durch die Lagerböcke 28 und 29, durch die Querbalken 30 und 31 sowie durch die Elektrodenträger 32 ist eine Elektrodenträger-Anordnung gebildet, die einerseits unter Wirkung der Antriebszylinder 22 in der Höhenlage verstellbar und andererseits von einer Ruhestellung in eine Betriebsstellung ausschwenkbar ist. Die Verschwenkbewegung erfolgt dabei unter Wirkung von z.B. pneumatischen Antriebszylindern 35, die sich einerends an den Verbindungstraversen 21 abstützen und die andernends gelenkig mit den Schwenkarmen 24 bzw. 26 verbunden sind.

Durch die zuvor beschriebenen Elemente ist eine Elektrodenträger-Anordnung gebildet, die zwei unabhängig voneinander her ausschwenkbare Trägereinheiten umfasst: Eine erste Einheit 36, gebildet aus der einen Hälfte des Rahmens, dem ersten Schwenkarmpaar 23, 24, dem Lagerbock 28, dem Querbalken 30 und vier Elektrodenträgern 32 (in Fig. 2 und 3 links), und eine zweite Einheit 37, gebildet aus der anderen Hälfte des Rahmens, dem zweiten Schwenkarmpaar 25, 26, dem Lagerbock 29, dem Querbalken 31 und vier Elektrodenträgern 32 (in Fig. 2 und 3 rechts). Die beiden Einheiten 36 und 37 sind zentralsymmetrisch zur Mittelachse A der Vorderwand 14 der Wanne 5 angeordnet. Die Anordnung ist dabei so getroffen, dass jede Einheit 36 bzw.

37 zwei Stellungen einnehmen kann:

– Eine Ruhestellung (in Fig. 3 ausgezogen gezeichnet bzw. gemäss Darstellung in Fig. 4), in welcher die Schwenkarme 23, 24 bzw. 25, 26 gegen den Rahmen 19, 20, 21 hin verschwenkt sind, so dass die Querbalken 30 bzw. 31 und mit ihnen die Elektrodenträger 32 möglichst nahe bei der Vorderwand 14 liegen, wobei jede Einheit 36 bzw. 37 nur Platz auf der jeweils zugeordneten Hälfte der Vorderwand 14, beidseits der Mittelachse A, einnimmt.

– Eine Betriebsstellung (in Fig. 3 gestrichelt gezeichnet bzw. gemäss Darstellung in Fig. 5), in welcher die Schwenkarme 23, 24 bzw. 25, 26 gegen das Innere der Wanne 5 hin ausgeschwenkt sind, so dass die Querbalken 30 bzw. 31 und mit Ihnen die Elektrodenträger 32 in einer im wesentlichen zentralen Lage innerhalb der Wanne 5 liegen, derart, dass sich jeweils zwei der Elektrodenträger 32 je links und rechts der Mittelachse A befinden.

Dies kann dadurch erreicht werden, dass die Anlenkpunkte (Achse der Wellen 27) der ersten und zweiten Armpaare 23, 24 bzw. 25, 26 relativ nahe bei der Mittelachse A liegen, dass die Schwenkarme 23-26 in ihrer Grundrissprojektion gesehen derart abgewinkelt sind, dass die jeweils beiden Schwenkachsen der Schwenkarme um die Breite der Traversen 16 bzw. 19 gegeneinander versetzt sind, und dass die Arme 23 bzw. 25 am jeweils äusseren, voneinander abgekehrten Ende der Querbalken 30 bzw. 31 angelenkt sind, während die Arme 24 bzw. 26 jeweils in der Mitte der Querbalken 30 bzw. 31 gelenkig befestigt sind.

Wie ersichtlich, soll und kann nur jeweils eine der beiden Trägereinheiten 36 und 37 von der Ruhestellung in die Betriebsstellung verschwenkt werden, da das Spannfutter 9 der Pinole 8 bei einer Wechseloperation nur Zugriff auf eine in den Elektrodenträgern 32 aufgenommene Elektrode 10 nimmt.

Die Funktionsweise der Vorrichtung ist wie folgt:

Es wird angenommen, dass sämtliche Elektrodenträger 32 mit je einer Elektrode 10 bestückt sind und dass beide Trägereinheiten 36 und 37 in der in Fig. 3 ausgezogen gezeichneten, eingeschwenkten Ruhelage sind. Diese Situation ist auch in Fig. 4 dargestellt. Nun soll der Erodiervorgang beginnen und die Pinole 8 muss mit einer Elektrode bestückt werden. Von der Voraussetzung ausgehend, dass sich die zunächst benötigte Elektrode in der Trägereinheit 36 befindet, werden die Schwenkarme 23 und 24 unter Wirkung des Antriebszylinders 35 aus ihrer Ruhelage in die in Fig. 3 gestrichelt gezeichnete Betriebslage verschwenkt. Dadurch befinden sich die vier in den Elektrodenträgern 32 der ersten Einheit 36 befindlichen Elektroden in einer im wesentlichen zentralen Lage innerhalb der Wanne 5. Nun wird die Wanne 5 durch nicht gezeigte, an sich bekannte Antriebsmittel in X- und/oder Y-Richtung verschoben, bis sich die Mittelachse B des Spannfutters 9 der Pinole 8 mit der Mittelachse C der Elektrode 10 deckt. Darauf kann der gesamte Rahmen 19, 20, 21 unter Wirkung der Antriebszylinder 22 gegen oben verschoben werden, bis der Schaft 34 der Elektrode 10 in das Spannfutter 9 eintritt und die Elektrode an der Pinole 8 aufgespannt ist. Durch Verschiebung der Wanne 5 in Richtung $Y_1$ (Fig. 5) wird der Schaft 34 vom Elektrodenträger 32 freigegeben, der Rahmen 19, 20, 21 kann wieder abgesenkt und die Schwenkarme 23, 24 können wieder in die Ruhelage zurückverschwenkt werden.

Nun kann der Erodiervorgang mittels der ersten, eben eingespannten Elektrode 10 beginnen. Die zurückgeschwenkten Trägereinheiten 36 und 37 behindern diesen nicht, da die auf Lager gehaltenen Elektroden 10 in den Elektrodenträgern 32 sehr nahe an der Vorderwand 14 liegen (Fig. 4).

Ist die erste Stufe der erosiven Bearbeitung mittels der ersten Elektrode beendet, wird die erste Trägereinheit 36 wieder ausgeschwenkt und angehoben und schliesslich durch Verschieben der Wanne 5 in X- und $Y_2$-Richtung in eine solche Position gebracht, dass der betreffende Elektrodenträger 32 die in der Pinole 8 eingespannte Elektrode 10 am Schaft 34 ergriffen hat. Anschliessend erfolgt ein Absenken des Rahmens 19, 20, 21 oder ein Anheben der Pinole 8, eine Verschiebung der Wanne 5 in X-Richtung, bis die Mittelachse C der nächsten, benötigten Elektrode 10 mit der Mittelachse B der Pinole 8 fluchtet, und ein erneutes Anheben des Rahmens 19, 20, 21 bzw. Absenken der Pinole 8, um diese nächste Elektrode 10 einzusetzen. Schliesslich wird die Wanne 5 wieder in der schon zuvor beschriebenen Weise in $Y_1$-Richtung verschoben, der Rahmen gegebenenfalls abgesenkt und die Schwenkarme 23, 24 zurückgeschwenkt, damit der nachfolgende Erosionsschritt ablaufen kann.

Dieser Vorgang wiederholt sich in analoger Weise, unter Einbezug einer Mehrzahl von Elektroden, bis die erosive Bearbeitung des Werkstückes 12 beendet ist. Wenn im Beispielsfall alle vier Elektroden 10 in der ersten Trägereinheit 26 verwendet worden sind, wird natürlich anschliessend die zweite Trägereinheit 37 eingeschwenkt. Durch die Ausbildung und Anordnung der Schwenkarme 23, 24 bzw. 25, 26 befindet sich der jeweilige Querbalken 30 bzw. 31 mit den zugeordneten Elektrodenträgern 32 in beiden Fällen an der gleichen, zentralen Position innerhalb der Wanne 5, was die erforderlichen Verschiebebewegungen minimiert und die Steuerung der Maschine erheblich vereinfacht. Im Interesse einer Optimierung der Bewegungsabläufe empfiehlt es sich dabei, die Elektroden in einer sinnvollen Anordnung in die Elektrodenträger 32 einzugeben, z.B. die ersten vier benötigten Elektroden in die Einheit 36 und die nächsten vier benötigten Elektroden in die Einheit 37.

Wie bereits erwähnt, kann das Einsetzen einer Elektrode 10 in das Spannfutter der Pinole 8, nach erfolgter Positionierung in X- und Y-Richtung, entweder durch Anheben des Rahmens 19, 20, 21 oder durch Absenken der Pinole 8 oder aber durch beide Bewegungen gleichzeitig erfolgen.

Wenn Werkstücke mit bedeutenden Höhenabmessungen bearbeitet werden müssen, wie es in Fig. 5 mit 12' gestrichelt angedeutet ist, wird, im Gegensatz zum vorher geschilderten Betriebsablauf, zuerst ein Anheben des Rahmens 19, 20, 21 erforderlich, bevor die Schwenkarme 23, 24 bzw. 25, 26 ausgeschwenkt werden können. Das Einsetzen der Elektrode 10 in das Spannfutter 9 der Pinole 8 erfolgt in diesem Fall ausschliesslich durch Absenken der Pinole 8, nachdem die X-Y-Positionierung beendet ist.

Die vorstehend beschriebene Vorrichtung kann natürlich im Rahmen der Erfindung auf mannigfache Art abgewandelt werden. So können z.B. die Querbalken 30 bzw. 31 lösbar und auswechselbar an den Lagerböcken 28 bzw. 29 befestigt sein, um wahlweise eine Gruppe von vier relativ weit auseinanderliegenden Elektrodenträgern 32 für vergleichsweise grosse Elektroden 10 (wie in den Zeichnungen gezeigt) oder eine Gruppe von vielleicht fünf oder sechs näher beieinanderliegenden Elektrodenträgern 32 für kleinere Elektroden aufzunehmen. Auch die Ausbildung und Anordnung des Rahmens 19, 20, 21 und der Schwenkarme 23, 24, 25, 26 kann anders sein, solange sich die erfindungsgemäss geforderte Schwenkbewegung der Elektrodenträger von einer Ruhestellung nahe der Wannenwand in eine Betriebsstellung in annähernd zentraler Lage innerhalb der Wanne realisieren lässt.

Mit der erfindungsgemäss vorgeschlagenen Vorrichtung ist jedenfalls ein Handhabungsgerät für Elektroden geschaffen, das sehr einfach im Aufbau, robust und unkompliziert sowie preisgünstig in der Herstellung ist. Es mag für zahlreiche Anwendungszwecke durchaus genügen, bei denen nicht gefordert ist, eine grosse Zahl von Elektroden zugriffsbereit zu halten, sondern bei denen nur einige wenige Elektroden gewechselt werden müssen. Da die meisten auf dem Markt befindlichen Senkerodiermaschinen mit einer Wanne ausgerüstet sind, deren Vorderwand sich in der Art einer Türe herausschwenken lässt, bietet sich die Ausführung der vorgeschlagenen Vorrichtung, bei der die gesamte Elektrodenträger-Anordnung an der Vorderwand verankert ist, geradezu für die Nachrüstung bestehender Maschinen an. Weil die erforderlichen Bewegungsabläufe innerhalb der Vorrichtung sehr einfach sind (Verschwenkung der Arme und Höhenverstellung des Rahmens), kann ein vollautomatischer Elektrodenwechsel mit Hilfe der erfindungsgemässen Vorrichtung sehr einfach in ein bestehendes Maschinenprogramm integriert werden.

**Patentansprüche**

1. Vorrichtung zur Handhabung von Elektroden (10) an einer Senkerodiermaschine (1), welche eine das flüssige Dielektrikum und das zu bearbeitende Werkstück (12) aufnehmende Wanne (5) aufweist, die gegenüber der Pinole (8) in X- und Y-Richtung verstellbar gelagert ist, wobei innerhalb der Wanne (5) eine Elektrodenträger-Anordnung (36, 37) mit einer Mehrzahl von Elektrodenträgern (32) angeordnet ist, dadurch gekennzeichnet, dass die Elektrodenträger-Anordnung einen Rahmen (19, 20, 21) aufweist, der an einer der Seitenwände (14) der Wanne (5) höhenverstellbar gelagert ist und an dem mindestens zwei Schwenkarme (23, 24 bzw. 25, 26) befestigt sind, die gemeinsam an ihren freien Enden eine Mehrzahl von Elektrodenträgern (32) tragen, so dass die Elektrodenträger (32) von einer eingezogenen Ruhestellung nahe einer Seitenwand (14) der Wanne (5) in eine Betriebsstellung verschwenkbar sind, in der sie von der Seitenwand (14) der Wanne (5) gegen das Wanneninnere in einen Bereich hineinragen, in den die Pinole (8) durch X- und/oder Y-Verstellung der Wanne (5) bringbar ist.

2. Vorrichtung nach Patentanspruch 1, dadurch gekennzeichnet, dass die Elektrodenträger-Anordnung (36, 37) in Z-Richtung verstellbar ist.

3. Vorrichtung nach Patentanspruch 2, dadurch gekennzeichnet, dass an den freien Enden der beiden Schwenkarme (23, 24 bzw. 25, 26) ein Querbalken (30 bzw. 31) gelenkig befestigt ist, an dessen Oberseite mehrere im wesentlichen gabelförmige, vom Querbalken abstehende Elektrodenträger (32) angeordnet sind.

4. Vorrichtung nach Patentanspruch 3, dadurch gekennzeichnet, dass der Querbalken (30 bzw. 31) mit den Elektrodenträgern (32) auswechselbar an den Schwenkarmen (23, 24 bzw. 25, 26) befestigt ist.

5. Vorrichtung nach einem der vorangehenden Patentansprüche, dadurch gekennzeichnet, dass am Rahmen (19, 20, 21) zwei Schwenkarmpaare 23, 24 und 25, 26) mit je einer Mehrzahl von Elektrodenträgern (32) zentralsymmetrisch angeordnet sind.

6. Vorrichtung nach Patentanspruch 5, dadurch gekennzeichnet, dass die Anlenkung der Schwenkarme (23, 24 bzw. 25, 26) am Rahmen (19, 20, 21) und an den Elektrodenträgern (32) derart erfolgt, dass letztere in eine im wesentlichen zentrale Lage innerhalb der Wanne (5) verschwenkbar sind.

7. Vorrichtung nach Patentanspruch 6, dadurch gekennzeichnet, dass die Schwenkarme (23, 24 bzw. 25, 26) abgewinkelt sind.

8. Vorrichtung nach einem der vorangehenden Patentansprüche, dadurch gekennzeichnet, dass die Elektrodenträger-Anordnung (36, 37) an der in der Art einer Türe aufklappbaren Vorderwand (14) der Wanne (5) angeordnet ist.

9. Vorrichtung nach einem der vorangehenden Patentansprüche, dadurch gekennzeichnet, dass zum Verschwenken der Schwenkarme (23, 24 bzw. 25, 26) und zur Höhenverstellung des Rahmens (19, 20, 21) pneumatische oder dgl. Antriebszylinder (35 bzw. 22) vorgesehen sind.

## Claims

1. Device for handling electrodes (10) in an electroerosion machine (1), which comprises a trough (5) receiving the liquid dielectric and the work-piece (12) to be processed, which trough (5) is mounted to be adjustable in the X-and Y-direction with respect to the sleeve (8), an electrode support arrangement (36, 37) with a plurality of electrode supports (32) being disposed inside the trough (5), characterised in that the electrode support arrangement comprises a frame (19, 20, 21), which is mounted to be vertically adjustable on one of the side walls (14) of the trough (5) and on which at least two swivel arms (23, 24 or 25, 26) are attached, which jointly at their free ends support a plurality of electrode supports (32), so that the electrode supports (32) can be swung from a retracted inoperative position close to one side wall (14) of the trough (5) into an operating position, in which they project from the side wall (14) of the trough (5) towards the inside of the trough into a region in which the sleeve (8) can be brought by X- and/or Y-displacement of the trough (5).

2. Device according to Patent Claim 1, characterised in that the electrode support arrangement (36, 37) is adjustable in the Z-direction.

3. Device according to Patent Claim 2, characterised in that pivotally attached to the free ends of the two swivel arms (23, 24 or 25, 26) is a transverse beam (30 or 31), on the upper side of which is disposed a plurality of substantially fork-like electrode supports (32) projecting from the transverse beam.

4. Device according to Patent Claim 3, characterised in that the transverse beam (30 or 31) with the electrode supports (32) is exchangeably attached to the swivel arms (23, 24 or 25, 26).

5. Device according to one of the preceding Patent Claims, characterised in that disposed on the frame (19, 20, 21) in a centrosymmetrical manner are two pairs of swivel arms (23, 24 and 25, 26) each with a plurality of electrode supports (32).

6. Device according to Patent Claim 5, characterised in that the pivoting of the swivel arms (23, 24 or 25, 26) on the frame (19, 20, 21) and on the electrode supports (32) takes place so that the latter can be tilted into a substantially central position within the trough (5).

7. Device according to Patent Claim 6, characterised in that the swivel arms (23, 24 or 25, 26) are bent.

8. Device according to one of the preceding Patent Claims, characterised in that the electrode support arrangement (36, 37) is located on the front wall (14) of the trough (5), which can be hinged in the manner of a door.

9. Device according to one of the preceding Patent Claims, characterised in that pneumatic or similar drive cylinders (35 or 22) are provided for tilting the swivel arms (23, 24 or 25, 26) and for the vertical adjustment of the frame (19, 20, 21).

## Revendications

1. Dispositif de manipulation d'électrodes (10) sur une machine d'électroérosion (1) présentant une cuve (5) qui reçoit le diélectrique liquide et la pièce à usiner (12) et qui est positionnée avec possibilité de réglage dans les directions X et Y par rapport au fourreau (8), un agencement de porte-électrodes (36, 37) avec une pluralité de porte-électrodes (32) étant disposé à l'intérieur de la cuve, caractérisé par le fait que l'agencement de porte-électrodes présente un cadre (19, 20, 21) qui, avec possibilité de réglage en hauteur, est positionné sur l'une des parois latérales (14) de la cuve (5) et auquel sont fixés au moins deux bras pivotants (23, 24; 25, 26), lesquels portent conjointement, en leurs extrémité libres, une pluralité de porte-électrodes (32), de sorte que lesdits porte-électrodes (32) peuvent être déplacés par pivotement d'une position de repos rentrée, proche d'une paroi latérale (14) de la cuve (5), à une position de fonctionnement dans laquelle ils font saillie, depuis la paroi latérale (14) de la cuve (5), vers l'intérieur de la cuve, dans une région dans laquelle le fourreau (8) peut être amené par déplacement de réglage en X et/ou Y de la cuve (5).

2. Dispositif selon revendication 1, caractérisé par le fait que l'agencement de porte-électrodes (36, 37) est réglable par déplacement dans la direction Z.

3. Dispositif; selon revendication 2, caractérisé par le fait qu'aux extrémités libres des deux bras pivotants (23, 24; 125, 26) est fixée de manière articulée une poutre transversale (30, 31) sur le côté supérieur de laquelle sont agencés plusieurs porte-électrodes (32) sensiblement en forme de fourche, s'écartant de la poutre transversale.

4. Dispositif selon revendication 3, caractérisé par le fait que la poutre transversale (30; 31) avec les porte-électrodes (32) est amoviblement fixée aux bras pivotants (23, 24; 25, 26).

5. Dispositif selon l'une des revendications précédentes, caractérisé par le fait que deux paires de bras pivotants (23, 24 et 25, 26), chacune avec une pluralité de porte-électrodes (32, sont agencées avec une symétrie centrale sur le cadre (19, 20, 21).

6. Dispositif selon revendication 5, caractérisé par le fait que l'articulation des bras pivotants (23, 24; 25, 26) sur le cadre (19, 20, 21) et sur les porte-électrodes (32) s'effectue de manière telle que ces derniers puissent être amenés par pivotement à une position sensiblement centrale à l'intérieur de la cuve (5).

7. Dispositif selon revendication 6, caractérisé par le fait que les bras pivotants (23, 24; 25, 26) sont coudés.

8. Dispositif selon l'une des revendications précédents, caractérisé par le fait que l'agencement de porte-électrodes (36, 37) est disposé contre la paroi avant (14), ouvrable à la manière d'une porte, que comporte la cuve (5).

9. Dispositif selon l'une des revendications précédentes, caractérisé par le fait que des vérins d'entrainement pneumatiques ou analogues (35; 22) sont prévus pour faire pivoter les bras pivotants (23, 24; 25, 26) et pour le déplacement de réglage en hauteur du cadre (19, 20, 21).

FIG. 1

FIG.2

EP 0 298 028 B1

FIG.3

FIG. 5

FIG. 4